# FASCICULE DE BREVET EUROPEEN

(11) **EP 3 861 628 B1**
(45) Date de publication et mention de la délivrance du brevet: **10.08.2022**
(21) Numéro de dépôt: 19795283.1
(22) Date de dépôt: 30.09.2019
(51) Int. Cl.: H02M 7/493, H02M 7/5395, H02P 27/08, H02M 1/00

(54) **PROCÉDÉ DE COMMANDE D'UN ENSEMBLE D'ONDULEURS DANS UN SYSTÈME DE GÉNÉRATION ÉLECTRIQUE A ONDULEURS PARALLELISES**
VERFAHREN ZUR STEUERUNG EINER ANORDNUNG VON INVERTERN IN EINEM STROMERZEUGUNGSSYSTEM MIT PARALLELEN INVERTERN
METHOD FOR CONTROLLING AN ASSEMBLY OF INVERTERS IN AN ELECTRICITY GENERATION SYSTEM WITH PARALLEL INVERTERS

(30) Priorité: 04.10.2018 FR 1859214
(43) Date de publication de la demande: 11.08.2021
(73) Titulaire: Safran Electrical & Power, 31702 Blagnac Cedex (FR)
(72) Inventeur: JANKEE, Ashvin, 77550 Moissy-Cramayel (FR); CAPRON, Guillaume, 77550 Moissy-Cramayel (FR); PAILHOUX, Frédéric, 77550 Moissy-Cramayel (FR); MORIN, Pascal, 77550 Moissy-Cramayel (FR); DHOKKAR, Sonia, 77550 Moissy-Cramayel (FR)
(74) Mandataire: Regimbeau
(86) Numéro de dépôt international: PCT/FR2019/052301
(87) Numéro de publication internationale: WO 2020/070421

(56) Documents cités:
- JP-A- H0 433 573
- JP-A- 2017 139 938
- US-A1- 2014 203 756

## Description

La présente invention concerne un procédé de commande d'un ensemble d'onduleurs dans un système de génération électrique à onduleurs parallélisés.

Dans le domaine aéronautique, il est connu d'avoir une génératrice triphasée synchrone alimentée par chaque moteur d'un avion. Des onduleurs permettent de convertir le courant continu (DC) en courant alternatif (AC) pour piloter une charge (moteur électrique, chauffage, etc.). Ces onduleurs peuvent être mono-phase ou multi-phase.

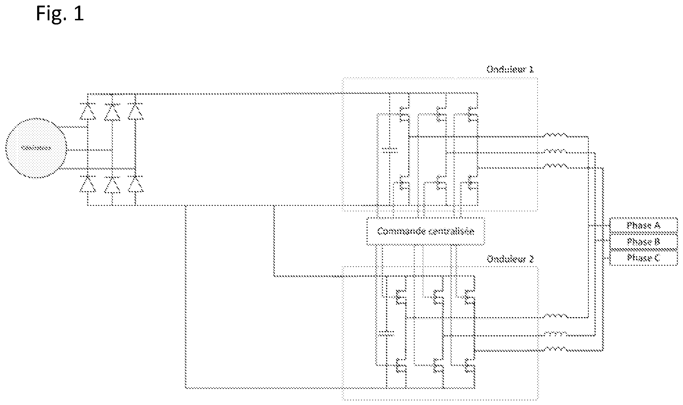

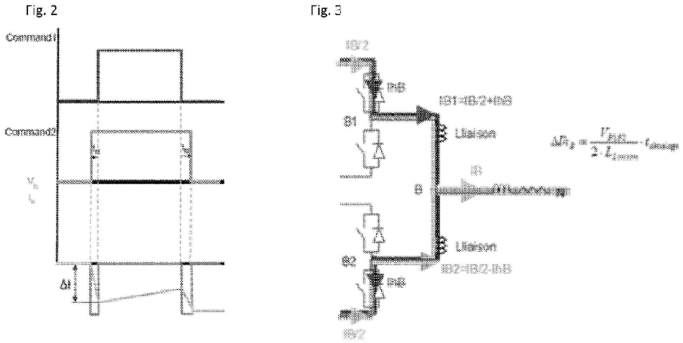

D'une manière traditionnelle on utilise plusieurs onduleurs parallélisés en mode synchrone (comme représenté sur la figure 1). Ces onduleurs ont donc des inductances de sortie reliées les unes aux autres. Or, en fonctionnement, toute différence dans le rapport cyclique du courant fourni par chaque onduleur ou dans la synchronisation entre onduleurs provoque un courant de circulation entre les onduleurs. Ces courants de circulation provoquent des décalages dans les courants issus des onduleurs, comme représenté sur la figure 2. Pour diminuer ces courants il est connu d'ajouter des inductances de sortie, comme on peut le voir sur la figure 3. Plus l'inductance ajoutée sera importante, plus les courants de circulation seront réduits. Cependant, l'ajout d'une inductance de sortie augmente la masse du système. Or, il est bien connu que la masse est un facteur limitant en aéronautique. Cette solution n'est donc pas satisfaisante.

En conséquence, il est nécessaire de fournir un procédé de commande d'un ensemble d'onduleurs, dans un système de génération électrique à onduleurs parallélisés, qui permette d'avoir un signal stable en sortie, sans décalage, sans augmenter la masse des éléments embarqués.

Les documents US2014/203756, JP2017139938 et JPH0433573 divulguent des ensembles d'onduleurs parallélisés.

### PRESENTATION GENERALE DE L'INVENTION

Selon un premier aspect, l'invention concerne un procédé de commande d'un ensemble d'au moins deux onduleurs, dans un système de génération électrique à onduleurs parallélisés du côté continu et du côté alternatif.

Le procédé comprend la mise en œuvre par au moins une unité de traitement de données d'étapes de :
(a) pour chaque onduleur dudit ensemble, obtention d'un rapport cyclique d'entrée d'un signal d'entrée reçu par ledit onduleur,
(b) calcul d'un rapport cyclique moyen à partir des rapports cycliques d'entrée,
(c) modulation et synchronisation du signal d'entrée reçu par chaque onduleur en un signal de sortie présentant un rapport cyclique de sortie correspondant au rapport cyclique moyen.

D'une manière particulièrement avantageuse, le calcul du rapport cyclique moyen de l'ensemble des rapports cycliques d'entrées et l'utilisation de ce rapport cyclique moyen pour moduler le signal de sortie permet d'avoir un même signal stable émis par tous les onduleurs. En d'autres termes, le procédé selon l'invention permet d'avoir un système redondant (et donc sécurisé) dans lequel les onduleurs émettent tous un même signal de sortie synchronisé évitant ainsi les problèmes de décalage de phase et permettant ainsi de s'affranchir de l'ajout de bobines supplémentaires à la sortie des onduleurs, ce qui permet un gain de masse.

Selon un mode de réalisation préféré, chaque onduleur dudit ensemble peut comprendre une unité de traitement de données dédiée, l'étape (a) étant mise en œuvre par une pluralité desdites unités de traitement de données dédiées.

Selon un mode de réalisation particulièrement préféré, l'étape (a) peut comprendre la réception par chaque onduleur de l'ensemble des rapports cycliques d'entrées des signaux reçus par l'ensemble des onduleurs.

Cette disposition permet d'avoir un système robuste et redondant, dans lequel les informations sont partagées. En d'autres termes, cette disposition permet de démultiplier les échanges d'informations pour éviter une panne généralisée en cas de panne d'un onduleur.

L'étape (a) peut comprendre la détermination par chacune de ladite pluralité d'unités de traitement de données dudit rapport cyclique d'entrée du signal d'entrée reçu par son onduleur.

L'étape (b) peut être mise en œuvre de façon indépendante par chaque unité de traitement de données mettant en œuvre l'étape (a).

Chaque onduleur peut comprendre une unité de modulation, l'étape (c) comprenant pour chaque onduleur dudit ensemble l'envoi à l'unité de modulation dudit onduleur d'une commande de modulation.

L'étape (c) peut être mise en œuvre indépendamment par chaque unité de traitement de données.

L'étape (c) peut être réalisée en générant un signal rectangulaire à une fréquence déterminée où un temps à un état haut du signal par rapport à une période du signal correspond à une valeur du rapport cyclique de sortie.

Selon un deuxième aspect, l'invention concerne un ensemble d'onduleurs parallélisés dans un système de génération électrique commandés suivant un procédé selon l'invention.

L'onduleur peut comprendre une unité de traitement de données, une unité de communication et une unité de modulation.

L'unité de traitement de données peut être adaptée pour mettre en œuvre l'étape (b).

L'unité de communication peut être adaptée pour mettre en œuvre l'étape (a) du procédé, pour transmettre le rapport cyclique d'entrée obtenu par l'onduleur et recevoir les rapports cycliques d'entrée obtenus par d'autres onduleurs.

L'unité de modulation peut être adaptée pour mettre en œuvre l'étape (c).

Selon un troisième aspect, l'invention concerne un produit programme d'ordinateur comprenant des instructions de code pour l'exécution d'un Procédé de commande d'un ensemble d'onduleurs selon l'invention, lorsque ledit programme est exécuté sur un ordinateur, un automate, ou un circuit logique programmable.

Selon un quatrième aspect, l'invention concerne un moyen de stockage lisible par un équipement informatique sur lequel un produit programme d'ordinateur comprend des instructions de code pour l'exécution d'un Procédé de commande d'un ensemble d'onduleurs selon l'invention.

### DESCRIPTION DES FIGURES

D'autres caractéristiques et avantages de l'invention ressortiront encore de la description qui suit, laquelle est purement illustrative et non limitative, et doit être lue en regard des figures annexées sur lesquelles :
- la figure 1 est un schéma électrique d'un système connu ;
- la figure 2 est un graphique des phases des signaux en sortie du système de la figure 1 ;
- la figure 3 est complète la figure 2 en montrant la circulation des courants sur un schéma électrique ;

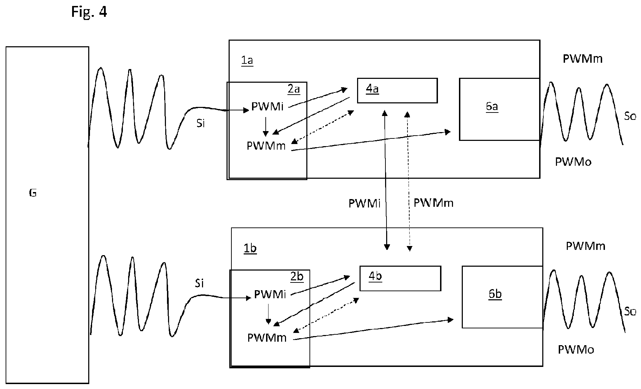

- la figure 4 est un schéma bloc d'un ensemble d'onduleurs parallélisés commandés selon un procédé selon l'invention ;

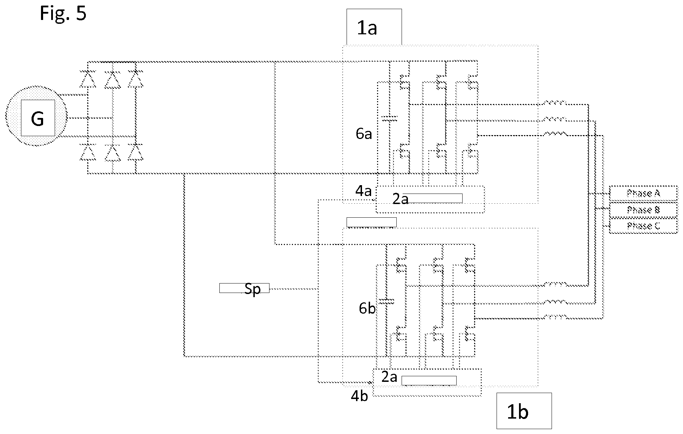

- la figure 5 est un schéma électrique d'un ensemble d'onduleurs selon l'invention.

### DESCRIPTION DETAILLEE DE L'INVENTION

L'invention concerne un ensemble d'onduleurs 1a, 1b et un procédé de commande d'un ensemble d'onduleurs 1a, 1b dans un système de génération électrique à onduleurs parallélisés.

Il est précisé que par commodité la description qui va suivre est réalisée avec deux onduleurs 1a et 1b, mais l'invention ne se limite aucunement à deux onduleurs 1a, 1b. Il est possible de mettre en œuvre l'invention avec, trois, quatre ou autant d'onduleurs que désiré.

### Onduleur

L'onduleur 1a, 1b comprend principalement une unité de traitement 2a, 2b, une unité de communication 4a, 4b et une unité de modulation 6a, 6b.

L'onduleur 1a, 1b est constitué d'une électronique numérique comprenant une partie commande et une partie électronique de puissance.

La partie commande intègre l'unité de traitement 2a, 2b, et l'unité de communication 4a, 4b. La partie commande peut être complètement intégrée à l'onduleur 1a, 1b ou partiellement déportée à l'extérieure de l'onduleur 1a, 1b.

La partie électronique de puissance intègre l'unité de modulation 6a, 6b.

Selon le mode de réalisation ici présenté, un circuit logique programmable du type « field-programmable gate array » (FPGA) intègre la partie commande, c'est-à-dire, les unités de traitement 2a, 2b, et de communication 4a, 4b.

L'unité de traitement 2a, 2b communique, via l'unité de communication 4a, 4b, avec l'extérieur pour recevoir les rapports cycliques locaux et envoyer des données de santé de l'onduleur. De plus, l'unité de traitement, 2a, 2b réalise le moyennage des rapports cycliques reçus des autres onduleurs 1a, 1b.

L'unité de communication 4a, 4b est basée sur des bus multipoints (1 vers n), soit n bus pour paralléliser n onduleurs 1a, 1b.

Selon le mode de réalisation ici présenté, l'unité de modulation 6a, 6b génère des signaux de sortie So en fonction de ce qui est demandé par l'unité de traitement 2a, 2b en utilisant un signal de porteuse Sp qui est comparé au rapport cyclique moyen PWMm demandé. Le signal de porteuse Sp est synchronisé par un signal externe permettant aux unités de modulation 6a, 6b des différents onduleurs 1a, 1b de générer les mêmes signaux So (suite au moyennage) au même instant (synchronisation). Ces signaux So présentant un rapport cyclique PWMo commandent des transistors de puissance pour générer des courants de sortie de chaque onduleur 1a, 1b. La modification des rapports cycliques permet ainsi de moduler le signal de sortie So.

En fonctionnement, d'une manière générale, chaque onduleur 1a, 1b reçoit un signal d'entrée Si représentant un rapport cyclique d'entrée PWMi. L'unité de traitement de données 2a, 2b sait déterminer le rapport cyclique d'entrée PWMi. L'onduleur 1a, 1b, peut moduler le signal d'entrée Si reçu en imposant un rapport cyclique de sortie PWMo. Le rapport cyclique de sortie PWMo est déterminé ou enregistré ou reçu par l'unité de traitement de données 2a, 2b. L'unité de traitement de données 2a, 2b ordonne ensuite à l'unité de modulation 6a, 6b de moduler le signal d'entrée Si reçu de sorte à ce qu'un signal de sortie So de l'onduleur 1a, 1b présente le rapport cyclique de sortie PWMo voulu.

Il est précisé que dans le cas où le rapport cyclique de sortie PWMo est envoyé à l'unité de traitement de données 2a, 2b, cela est effectué via l'unité de communication 4a, 4b.

De plus, tel que cela sera développé ci-après l'unité de communication 4a, 4b, peut aussi servir à l'échange d'informations entre plusieurs onduleurs 1a, 1b. Ces informations échangées pouvant être, par exemple, les rapports cycliques d'entrée PWMi de chaque onduleur 1a, 1b.

L'onduleur 1a, 1b est adapté pour être commandé selon le procédé décrit ci-après.

Il est précisé que l'onduleur 1a, 1b peut être multi-phases, dans ce cas, le procédé de commande (présenté ci-après) fonctionne sur le nombre total de phases de l'onduleur 1a, 1b.

### Procédé de commande

L'invention concerne un procédé de commande d'un ensemble d'onduleurs 1a, 1b dans un système de génération électrique à onduleurs parallélisés.

Le procédé comprend les étapes de :
(a) pour chaque onduleur 1a, 1b dudit ensemble, obtention d'un rapport cyclique d'entrée PWMi d'un signal d'entrée Si reçu par ledit onduleur 1a, 1b,
(b) calcul d'un rapport cyclique moyen PWMm à partir des rapports cycliques d'entrée PWMi,
(c) modulation et synchronisation du signal d'entrée Si reçu par chaque onduleur 1a, 1b en un signal de sortie So présentant un rapport cyclique de sortie PWMo correspondant au rapport cyclique moyen PWMm,

Selon un premier mode de réalisation, le procédé utilise une unité de traitement externe 2a, 2b, qui reçoit de chaque onduleur 1a, 1b son rapport cyclique d'entrée PWMi (étape (a)), transmis via l'unité de communication 4a, 4b.

Typiquement, l'unité de traitement 2a, 2b externe peut être un ordinateur, un automate, ou un circuit logique programmable comprenant des moyens de communication et au moins un processeur ou (et) une fonction réalisée en logique câblée. Selon ce mode de réalisation, l'étape (b) est réalisée par l'unité de traitement externe qui reçoit tous les rapports cycliques d'entrée PWMi, détermine en conséquence un rapport cyclique moyen PWMm en en calculant la valeur moyenne. Ce rapport cyclique moyen PWMm est ensuite transmis aux onduleurs 1a, 1b via leurs unités de communication 4a, 4b. Puis les unités de traitement de données 2a et 2b de chaque onduleur 1a, 1b ordonnent aux unités de modulation 6a, 6b de moduler le signal d'entrée Si reçu en un signal de sortie So en conséquence pour que le rapport cyclique de sortie PWMo soit égal à PWMm.

Selon un mode de réalisation préféré, les trois étapes (a), (b) et (c) peuvent être réalisées par les unités de l'ensemble, ou d'une partie, des onduleurs 1a, 1b. Ainsi, le système est redondant et robuste face à une panne d'un ou plusieurs onduleurs 1a, 1b.

Plus particulièrement, chaque onduleur 1a, 1b reçoit un signal d'entrée Si. L'unité de traitement 2a, 2b en détermine le rapport cyclique d'entrée PWMi correspondant (étape (a)). Puis, l'unité de communication 4a, 4b de chaque onduleur 1a, 1b transmet le rapport cyclique d'entrée PWMi aux autres onduleurs 1 (étape (a)). Ainsi chaque unité de communication 4a, 4b transmet le rapport cyclique d'entrée PWMi par son onduleur 1a ou 1b et reçoit les rapports cycliques d'entrée PWMi des autres onduleurs 1a ou 1b (étape (a)). Tous les rapports cycliques d'entrée PWMi sont transmis à l'unité de traitement 2a, 2b de chaque onduleur 1a, 1b (étape (a)). Puis, chaque unité de traitement 2a, 2b calcule le rapport cyclique moyen PWMm qui correspond à la moyenne des rapports cycliques d'entrée PWMi (étape (b)). Le rapport cyclique moyen PWMm est ensuite transmis à l'unité de modulation 6a, 6b. Ensuite, l'unité de modulation 6a, 6b module le signal d'entrée Si reçu selon le rapport cyclique moyen PWMm (étape (c)) pour que le rapport cyclique de sortie PWMo soit égal au rapport cyclique moyen PWMm. D'une manière particulièrement avantageuse, chaque onduleur 1a, 1b émet alors le même signal de sortie So présentant le même rapport cyclique moyen PWMm. Ainsi l'ensemble des signaux de sortie So émis par les onduleurs 1a, 1b sont synchronisés, de sorte qu'il n'y a pas de décalage entre eux.

Il est possible d'ajouter une étape supplémentaire de comparaison des rapports cycliques moyens PWMm déterminés par chaque onduleur 1a, 1b. Cette étape de vérification peut être réalisée par un échange mutuel tel que celui opéré pour les rapports cycliques d'entrée PWMi. Selon une autre disposition, cette étape peut être confiée à un unique onduleur 1a, 1b établi comme onduleur 1a, 1b de confiance qui centralise tous les rapports cycliques moyens PWMm déterminés et les compare à son propre rapport cyclique moyen PWMm. Selon encore une autre disposition, la vérification et la comparaison des rapports cycliques moyens PWMm peut être réalisée par une unité de traitement externe.

### Produit programme d'ordinateur

Selon un troisième aspect, l'invention concerne un produit programme d'ordinateur comprenant des instructions de code pour l'exécution du procédé de commande d'un ensemble d'onduleurs 1a, 1b selon l'invention, lorsque ledit programme est exécuté sur un ordinateur.

Il est entendu que ledit ordinateur peut être embarqué dans chaque onduleur 1a, 1b et comprendre les unités de traitement de données 2a, 2b. Ledit ordinateur peut aussi comprendre les unités de communication 4a, 4b. En l'espèce, ledit ordinateur peut être une carte électronique telle qu'un circuit logique programmable, ou un automate.

### Moyen de stockage

Selon un quatrième aspect, l'invention concerne un moyen de stockage lisible par un équipement informatique sur lequel un produit programme d'ordinateur *comprend* des instructions pour l'exécution du procédé de commande d'un ensemble d'onduleurs 1a, 1b selon l'invention. Il est précisé que le moyen de stockage peut être la mémoire interne d'une unité de traitement 2a, 2b, d'un onduleur 1a, 1b.

## Revendications

1. Procédé de commande d'un ensemble d'au moins deux onduleurs (1a, 1b) dans un système de génération électrique à onduleurs parallélisés du côté continu et du côté alternatif, le procédé étant **caractérisé en ce qu'**il comprend la mise en œuvre par au moins une unité de traitement de données (2a, 2b) d'étapes de :
(a) pour chaque onduleur (1a, 1b) dudit ensemble, obtention d'un rapport cyclique d'entrée (PWMi) d'un signal d'entrée (Si) reçu par ledit onduleur (1a, 1b),
(b) calcul d'un rapport cyclique moyen (PWMm) à partir des rapports cycliques d'entrée (PWMi),
(c) modulation et synchronisation du signal d'entrée (Si) reçu par chaque onduleur (1a, 1b) en un signal de sortie (So) présentant un rapport cyclique de sortie (PWMo) correspondant au rapport cyclique moyen (PWMm).

2. Procédé selon la revendication 1, dans lequel chaque onduleur (1a, 1b) dudit ensemble comprend une unité de traitement de données (2a, 2b) dédiée, l'étape (a) étant mise en œuvre par une pluralité desdites unités de traitement de données (2a, 2b) dédiées.

3. Procédé selon la revendication 2, dans lequel l'étape (a) comprend la réception par chaque onduleur (1a, 1b) de l'ensemble des rapports cycliques d'entrée (PWMi) des signaux d'entrée (Si) reçus par l'ensemble des onduleurs (1a, 1b).

4. Procédé selon l'une des revendications 2 ou 3, dans lequel l'étape (a) comprend la détermination par chacune de ladite pluralité d'unités de traitement de données (2a, 2b) dudit rapport cyclique d'entrée (PWMi) du signal d'entrée (Si) reçu par son onduleur (1a, 1b).

5. Procédé selon l'une des revendications 2 à 4, dans lequel l'étape (b) est mise en œuvre de façon indépendante par chaque unité de traitement de données (2a, 2b) mettant en œuvre l'étape (a).

6. Procédé selon l'une des revendications 1 à 5, dans lequel chaque onduleur (1a, 1b) comprend une unité de modulation (6a, 6b), l'étape (c) comprenant pour chaque onduleur (1a, 1b) dudit ensemble l'envoi à unité de modulation (6a, 6b) dudit onduleur (1a, 1b) d'une commande de modulation.

7. Procédé selon les revendications 5 et 6 en combinaison, dans laquelle l'étape (c) est mise en œuvre indépendamment par chaque unité de traitement de données (2a, 2b).

8. Procédé selon l'une des revendications 1 à 7, dans lequel l'étape (c) est réalisée en en générant un signal rectangulaire à une fréquence déterminée où le temps à l'état haut du signal par rapport à la période du signal correspond à la valeur du rapport cyclique de sortie (PWMo).

9. Ensemble d'onduleurs (1a, 1b) parallélisés dans un système de génération électrique **caractérisé en ce que** lesdits onduleurs (1a, 1b) sont commandés suivant un procédé selon l'une des revendications 1 à 8.

10. Ensemble d'onduleurs selon la revendication 9, dans lequel chaque l'onduleur (1a, 1b) comprend une unité de traitement de données (2a, 2b), une unité de communication (4a, 4b) et une unité de modulation (6a, 6b).

## Patentansprüche

1. Verfahren zur Steuerung einer Anordnung von mindestens zwei Wechselrichtern (1a, 1b) in einem Stromerzeugungssystem mit parallelisierten Wechselrichtern auf der Gleichstromseite und der Wechselstromseite, wobei das Verfahren **dadurch gekennzeichnet ist, dass** es die Umsetzung der Schritte durch mindestens eine Datenverarbeitungseinheit (2a, 2b) umfasst:
(a) für jeden Wechselrichter (1a, 1b) der Anordnung, Erlangen eines Eingangs-Tastgrads (PWMi) eines Eingangssignals (Si), das vom Wechselrichter (1a, 1b) empfangen wurde,
(b) Berechnung eines mittleren Tastgrads (PWMm), ausgehend von den Eingangs-Tastgraden (PWMi),
(c) Modulation und Synchronisation des Eingangssignals (Si), das von jedem Wechselrichter (1a, 1b) empfangen wurde, in ein Ausgangssignal (So), das einen Ausgangs-Tastgrad (PWMo) aufweist, der dem mittleren Tastgrad (PWMm) entspricht.

2. Verfahren nach Anspruch 1, wobei jeder Wechselrichter (1a, 1b) der Anordnung eine dedizierte Datenverarbeitungseinheit (2a, 2b) umfasst, wobei der Schritt (a) von einer Vielzahl der dedizierten Datenverarbeitungseinheiten (2a, 2b) umgesetzt wird.

3. Verfahren nach Anspruch 2, wobei der Schritt (a) das Empfangen, durch die Anordnung der Wechselrichter (1a, 1b), der Eingangs-Tastgrade (PWMi) der Eingangssignale (Si) umfasst, die durch die Anordnung der Wechselrichter (1a, 1b) empfangen wurden.

4. Verfahren nach einem der Ansprüche 2 oder 3, wobei der Schritt (a) die Bestimmung durch jede der Vielzahl von Datenverarbeitungseinheiten (2a, 2b) des Eingangs-Tastgrads (PWMi) des Eingangssignals (Si) umfasst, das durch seinen Wechselrichter (1a, 1b) empfangen wurde.

5. Verfahren nach einem der Ansprüche 2 bis 4, wobei der Schritt (b) von jeder Datenverarbeitungseinheit (2a, 2b), die den Schritt (a) ausführt, auf unabhängige Weise umgesetzt wird.

6. Verfahren nach einem der Ansprüche 1 bis 5, wobei jeder Wechselrichter (1a, 1b) eine Modulationseinheit (6a, 6b) umfasst, wobei der Schritt (c) für jeden Wechselrichter (1a, 1b) der Anordnung das Senden einer Modulationsaufforderung an die Modulationseinheit (6a, 6b) des Wechselrichters (1a, 1b) umfasst.

7. Verfahren nach den Ansprüchen 5 und 6 in Kombination, wobei der Schritt (c) unabhängig von jeder Datenverarbeitungseinheit (2a, 2b) umgesetzt wird.

8. Verfahren nach einem der Ansprüche 1 bis 7, wobei der Schritt (c) durch Erzeugen eines Rechtecksignals mit einer bestimmten Frequenz realisiert wird, oder die Zeit im hohen Zustand des Signals in Bezug auf die Periode des Signals dem Wert des Ausgangs-Tastgrads (PWMo) entspricht.

9. Anordnung von Wechselrichtern (1a, 1b), die in einem Stromerzeugungssystem parallelisiert sind, **dadurch gekennzeichnet, dass** die Wechselrichter (1a, 1b) gemäß einem Verfahren nach einem der Ansprüche 1 bis 8 gesteuert werden.

10. Anordnung von Wechselrichtern nach Anspruch 9, wobei jeder Wechselrichter (1a, 1b) eine Datenverarbeitungseinheit (2a, 2b), eine Kommunikationseinheit (4a, 4b) und eine Modulationseinheit (6a, 6b) umfasst.

## Claims

1. A method of controlling a set of at least two inverters (1a, 1b) in an electrical generation system with parallel inverters on the DC side and on the AC side, the method being **characterized in that** it comprises the implementation by at least one data processing unit (2a, 2b) of the steps of :
(a) for each inverter (1a, 1b) of said set, obtaining an input duty cycle (PWMi) of an input signal (Si) received by said inverter (1a, 1b),
(b) calculation of an average duty cycle (PWMm) from the input duty cycles (PWMi),
(c) modulation and synchronization of the input signal (Si) received by each inverter (1a, 1b) into an output signal (So) having an output duty cycle (PWMo) corresponding to the average duty cycle (PWMm).

2. The method according to claim 1, wherein each inverter (1a, 1b) of said set comprises a dedicated data processing unit (2a, 2b), step (a) being implemented by a plurality of said dedicated data processing units (2a, 2b).

3. The method of claim 2, wherein step (a) comprises receiving by each inverter (1a, 1b) the set of input duty cycles (PWMi) of the input signals (Si) received by the set of inverters (1a, 1b).

4. A method according to any of claims 2 or 3, wherein step (a) comprises each of said plurality of data processing units (2a, 2b) determining said input duty cycle (PWMi) of the input signal (Si) received by its inverter (1a, 1b).

5. The method according to any of claims 2 to 4, wherein step (b) is implemented independently by each data processing unit (2a, 2b) implementing step (a).

6. Method according to one of claims 1 to 5, wherein each inverter (1a, 1b) comprises a modulation unit (6a, 6b), the step (c) comprising for each inverter (1a, 1b) of said set sending to the modulation unit (6a, 6b) of said inverter (1a, 1b) a modulation command.

7. The method of claims 5 and 6 in combination, wherein step (c) is implemented independently by each data processing unit (2a, 2b).

8. A method according to any of claims 1 to 7, wherein step (c) is performed by generating a rectangular signal at a determined frequency where the time at the high state of the signal relative to the period of the signal corresponds to the value of the output duty cycle (PWMo).

9. A set of parallelized inverters (1a, 1b) in an electrical generation system **characterized in that** said inverters (1a, 1b) are controlled according to a method according to one of claims 1 to 8.

10. The inverter assembly of claim 9, wherein each inverter (1a, 1b) comprises a data processing unit (2a, 2b), a communication unit (4a, 4b) and a modulation unit (6a, 6b).
